# EUROPÄISCHE PATENTANMELDUNG

(11) **EP 2 402 627 A1**
(43) Veröffentlichungstag der Anmeldung: **04.01.2012**
(21) Anmeldenummer: 11166722.6
(22) Anmeldetag: 19.05.2011
(51) Int. Cl.: F16F 9/348, F16F 9/46

(54) **Stellventil für einen Dämpfer und zugehöriger Dämpfer**

(30) Priorität: 29.06.2010 DE 102010030630
(71) Anmelder: Robert Bosch GmbH, 70442 Stuttgart (DE)
(72) Erfinder: Speer, Harald, 71691, Freiberg (DE); Kurz, Edgar, 74081, Heilbronn-Horkheim (DE)

(57) **Zusammenfassung**

Die Erfindung betrifft ein Stellventil (10) für einen Dämpfer (1) mit einer Ventileinheit (30) und einem Ventilantrieb (40), wobei zur Einstellung von Dämpferkennwerten der Durchfluss eines Dämpferfluids über den Ventilantrieb (40) und die Ventileinheit (30) des Stellventils (10) einstellbar ist, und einen zugehörigen Dämpfer (1) mit mindestens einem solchen Stellventil (10). Erfindungsgemäß ist ein Ventilgehäuse (20) vorgesehen, in welchem der Ventilantrieb (40) und die Ventileinheit (30) fixiert sind, wobei das Ventilgehäuse (20) so ausgeführt und in den Dämpferfluidfluss eingeschleift ist, dass die Ventileinheit (30) nur in einer Richtung vom Dämpferfluid durchströmt ist, wobei ein Zulauf (23) des Dämpferfluids aus dem Dämpfer (1) über eine an einem Ende des Ventilgehäuses (20) angeordnete Einströmöffnung (22) durch eine Innerkontur des Ventilgehäuses (20) über die Ventileinheit (30) geführt ist, und ein Rücklauf (27) des Dämpferfluids von mindestens einer Ausströmöffnung (26) des Ventilgehäuses (20) über eine Außenkontur des Ventilgehäuses (20) zurück zum Dämpfer (1) geführt ist.

## Beschreibung

### Stand der Technik

Die Erfindung geht aus von einem Stellventil für einen Dämpfer nach der Gattung des unabhängigen Patentanspruchs 1 und von einem zugehörigen Dämpfer mit einem solchen Stellventil.

In konventionellen passiven Stoßdämpferkolben werden in der Regel Federpakete, bestehend aus mehreren Federscheiben zur Erzeugung einer bestimmten Dämpfungskraftkennlinie eingesetzt. Die Federrate des Federpakets im konventionellen Stoßdämpferkolben wird einmalig während der Entwicklung abgestimmt und lässt sich danach nicht mehr verstellen. Dieses Prinzip ermöglicht einen kostengünstigen und robusten Aufbau eines Dämpferkolbens bei gleichzeitig sehr guten und in der Praxis bewährten Verläufen der Dämpferkennlinien.

Zudem sind aus dem Stand der Technik Dämpfer für Fahrzeuge mit verstellbaren Dämpferkolben bekannt, die in der Regel nach dem Prinzip eines variablen Öffnungsquerschnitts arbeiten. Diese Dämpfer stellen die entsprechenden Stoßdämpferkennwerte über hydraulische Proportionalventile ein und können an unterschiedliche Fahrsituationen angepasst werden. Die Proportionalventile steuern beispielsweise mit Hilfe eines Steuerkolbens, der von einer Erregerspule bewegt wird, kontinuierlich den Fluiddurchfluss im Dämpfer. Die Proportionalventile sind entweder an den Dämpfer angeflanscht oder im Kolbenstempel des Dämpfers integriert.

In der Offenlegungsschrift DE 10 2007 025 966 A1 wird beispielsweise ein Dämpfer für ein Fahrzeug beschrieben. Der beschriebene Dämpfer umfasst einen mit einem Dämpferfluid befüllten Dämpferzylinder, in welchem ein Kolbenstempel über eine Kolbenstange geführt ist. Bei einer axialen Bewegung der Kolbenstange und damit des Kolbenstempels gegenüber dem Dämpferzylinder muss das Dämpferfluid durch eine innerhalb des Dämpferzylinders angeordnete Durchflusseinrichtung fließen, die Steuerspalte zur Vorgabe einer Dämpfungskennliniencharakteristik aufweist. Zur Regelung des Dämpferfluidstroms weist der Dämpfer eine innerhalb des Dämpferzylinders angeordnete Verstelleinrichtung auf, die zwei Federelemente und mindestens eine zwischen den Federelementen angeordnete Zwischenplatte aufweist. Ein Steuerspalt wird jeweils zwischen einem beweglichen Federelement und einer feststehenden Steuerkante im Dämpferzylinder gebildet. Durch den Widerstand, welcher dem Dämpferfluid innerhalb der Durchflusseinrichtung entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Somit verwendet der beschriebene Dämpfer zur Regelung des Dämpferfluidstroms ein in den Dämpfer integriertes zweifaches Stellventil, das eine kontinuierliche Dämpferkraftverstellung in Zug- und Druckstufe ermöglicht, so dass eine radindividuelle Regelung der Dämpferkraft durchführbar ist. Dieses Konzept stellt einen sehr hochwertigen technischen Stand sowie eine hohe Funktionalität dar.

### Offenbarung der Erfindung

Das erfindungsgemäße Stellventil für einen Dämpfer und der zugehörige Dämpfer nach den Merkmalen der unabhängigen Patentansprüche 1 oder 7 haben demgegenüber den Vorteil, dass ein einfaches, kostengünstiges Stellsystem darstellbar ist. So kann gezielt eine vorgebbare Anzahl von Dämpferkennlinien für die Zug- und Druckstufe eingestellt werden, wobei innerhalb des Stellventils nur eine adaptive Ventileinheit vorgesehen ist, welche immer nur in einer Richtung von einem Dämpferfluid durchströmt wird. Zur Einstellung von Dämpferkennwerten ist der Durchfluss des Dämpferfluids über einen Ventilantrieb und die Ventileinheit einstellbar. Zur Umsetzung der vereinfachten Funktionsanforderung ist ein Ventilgehäuse vorgesehen, in welchem der Ventilantrieb und die Ventileinheit fixiert sind, wobei das Ventilgehäuse so ausgeführt und in den Dämpferfluidfluss eingeschleift ist, dass die Ventileinheit nur in einer Richtung vom Dämpferfluid durchströmt ist, wobei ein Zulauf des Dämpferfluids aus dem Dämpfer über eine an einem Ende des Ventilgehäuses angeordnete Einströmöffnung durch eine Innerkontur des Ventilgehäuses über die Ventileinheit geführt ist, und ein Rücklauf des Dämpferfluids von mindestens einer Ausströmöffnung des Ventilgehäuses über eine Außenkontur des Ventilgehäuses zurück zum Dämpfer geführt ist.

Ein erfindungsgemäßer Dämpfer für ein Fahrzeug umfasst ein Innenrohr und ein Außenrohr, wobei der Durchfluss des Dämpferfluids zwischen dem Innenrohr und dem Außenrohr über mindestens ein erfindungsgemäßes adaptives Stellventil geführt ist.

Der Kern der Erfindung ist ein Ventilgehäuse, welches als zentrales Bauteil die Aufnahme der Ventileinheit und des Antriebs sicherstellt. Das Ventilgehäuse hat neben der Fixierung der genannten Baugruppen/Einzelteile auch die Aufgaben, eine Abdichtung zwischen Zu- und Rücklauf sowie eine Fixierung des Stellventils innerhalb einees Anschlussstutzens und eine optimale Strömungsführung von Zu- und Rücklauf umzusetzen. Durch eine Ausführung des Ventilgehäuses als Tiefziehteil kann in vorteilhafter Weise eine kostengünstige Lösung erreicht werden. Zudem ermöglicht die Anordnung der Bauteile eine einfache und kostengünstige Montagefolge in einer Richtung. Des Weiteren erlaubt der konstruktive Aufbau des erfindungsgemäßen Stellventils in vorteilhafter Weise eine vollständige Prüfung der Ventilfunktion vor dem Einbau in den Anschlussstutzen.

Durch die in den abhängigen Ansprüchen aufgeführten Maßnahmen und Weiterbildungen sind vorteilhafte Verbesserungen des im unabhängigen Patentanspruch 1 angegebenen Stellventils für einen Dämpfer und des im unabhängigen Patentanspruch 7 angegebenen Dämpfers möglich.

Besonders vorteilhaft ist, dass das Ventilgehäuse zur Dämpferfluidführung mindestens ein Führungsmittel aufweist, welches mit dem Ventilgehäuse verbunden ist, wobei eine Innenkontur des mindestens einen Führungsmittels das Dämpferfluid von der Ventileinheit zu der mindestens einen Ausströmöffnung führt und eine Außenkontur des mindestens einen Führungsmittels die Abmessungen eines Abströmquerschnitts des Rücklaufs definiert. Das mindestens eine Führungsmittel ist vorzugsweise als an das Ventilgehäuse angeformte Sicke ausgeführt, wobei das Ventilgehäuse beispielsweise drei Sicken aufweist, über welche das Stellventil innerhalb des Anschlussstutzens fixiert werden kann. Aufgrund der Außenkontur geben die Sicken einen Freiraum zwischen dem Anschlussstutzen und dem verbleibenden Ventilgehäuse vor, wobei der Freiraum den Abströmquerschnitt des Rücklaufs für das Dämpferfluid vorgibt.

In vorteilhafter Ausgestaltung des erfindungsgemäßen Stellventils ist das Ventilgehäuse am anderen Ende von einer Abdeckscheibe abgeschlossen, welche über mit dem Ventilgehäuse verbundene Biegezungen gehalten ist, wobei die Biegezungen in entsprechende Ausnehmungen der Abdeckscheibe eingreifen. Analog zu den Führungsmitteln können auch die Biegezungen an das Ventilgehäuse angeformt werden.

In weiterer vorteilhafter Ausgestaltung des erfindungsgemäßen Stellventils weitet sich ein innerer Querschnitt des Ventilgehäuses vom Querschnitt der Einströmöffnung auf einen Querschnitt zur Aufnahme der Ventileinheit auf. Die Aufweitung erfolgt vorzugsweise kontinuierlich um eine optimale Fluidführung innerhalb des Ventilgehäuses zu ermöglichen.

In weiterer vorteilhafter Ausgestaltung des erfindungsgemäßen Stellventils weist die Ventileinheit mindestens ein als Federelement ausgeführtes Verstellmittel auf, wobei die Federrate von mindestens einem der Federelemente zur Vorgabe eines Dämpfungsverhaltens über korrespondierende Vorgabemittel einstellbar ist. Die Vorgabemittel sind über den Ventilantrieb verstellbar, welcher in Abhängigkeit von Signalen von mindestens einer Sensoreinheit über elektrische Kontakte angesteuert wird. Das mindestens eine Federelement kann beispielsweise als einzelne Blattfeder und/oder Blattfederpaket und/oder einzelne Federscheibe und/oder Federpaket ausgeführt werden. Hierbei regeln die Verstellmittel den Durchfluss eines Dämpferfluids in eine vorgegebene Durchflussrichtung. Der erfindungsgemäße Dämpfer ermöglicht unter Beibehaltung des bewährten Blattfederprinzips eines passiven Dämpfers in vorteilhafter Weise durch die Einstellbarkeit der Federrate einer federbelasteten Drosselöffnung des Stellventils eine Vorgabe des Dämpfungsverhaltens. Zudem ermöglicht der erfindungsgemäße Dämpfer in vorteilhafter Weise eine direkte Steuerung des Fluidflusses, die praktisch ohne Verzögerungen und/oder Einschwingzustände erfolgt. Die Vorgabemittel der korrespondierenden Verstellmittel können durch den Ventilantrieb eingestellt werden, der beispielsweise als Drehantrieb ausgeführt ist. Die Vorgabemittel sind beispielsweise als Schiebelement ausgeführt, dessen Position zur Einstellung der Federrate über dem mindestens einen Federelement durch den Drehantrieb veränderbar ist. Das erfindungsgemäße Stellventil ermöglicht eine schnelle Auswahl von den vorgegebenen Dämpferkennwerten bzw. Dämpferkennlinien, so dass eine variierende Auswahl der Dämpfercharakteristik von "sehr hart" auf "sehr weich" möglich ist. Hierzu kann das Schiebelement ein Zahnstangensegment aufweisen, in das ein Zahnradsegment eingreift, das zur Positionsveränderung des Schiebelements vom Ventilantrieb bewegt wird. Je nach Ausführung des Ventilantriebs kann im stromlosen Zustand eine der beiden Extrempositionen als Rückfallposition vorgegeben werden. Alternativ kann der Ventilantrieb beispielsweise so ausgelegt werden, dass das Schiebeelement im stromlosen Zustand in einer Mittelstellung verharrt und über das Anlegen einer positiven bzw. negativen Spannung in Richtung der beiden Extrempositionen bewegt werden kann. Dadurch lässt sich bei der Montage je nach Zahneingriff zwischen dem Zahnstangensegment des Schiebeelements und dem Zahnradsegment eine Grundeinstellung aus den Dämpferkennlinien vorwählen.

In vorteilhafter Ausgestaltung des erfindungsgemäßen Dämpfers ist das Ventilgehäuse des Stellventils in einen Anschlussstutzen eingeführt, welcher das Innenrohr mit dem Außenrohr koppelt, so dass das Dämpferfluid aus dem Innenrohr des Dämpfers als Zulauf über die Einströmöffnung durch eine Innerkontur des Ventilgehäuses über die Ventileinheit zur mindestens einen Ausströmöffnung geführt ist und als Rücklauf von der mindestens einen Ausströmöffnung über eine Außenkontur des Ventilgehäuses zurück zum Dämpfer geführt ist.

In vorteilhafter Ausgestaltung des erfindungsgemäßen Dämpfers ist der Anschlussstutzen durch eine fuiddicht verschweißte Verschlussscheibe abgeschlossen. Die Verschlussscheibe ist so ausgeführt, dass die Aufnahme und Abdichtung der elektrischen Kontaktierung des Antriebs sichergestellt ist. Die druckfeste Abdichtung der Kontakte erfolgt beispielsweise durch einen entsprechenden Einglasungsprozess. Die druckfeste Abdichtung des Anschlussstutzens kann durch eine umlaufende Laserschweißverbindung zwischen Anschlussstutzen und Verschlussscheibe sichergestellt werden.

In vorteilhafter Ausgestaltung des erfindungsgemäßen Dämpfers dichtet das in den Anschlussstutzen eingepresste Ventilgehäuse über mindestens ein Dichtelement zwischen Zulauf und Rücklauf ab.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Darstellung eines Ausführungsbeispiels eines erfindungsgemäßen Stellventils für einen Dämpfer.
Fig. 2 zeigt eine schematische perspektivische Teildarstellung eines Ausführungsbeispiels eines Dämpfers mit einem erfindungsgemäßen Stellventil aus Fig. 1.
Fig. 3 zeigt eine schematische Schnittdarstellung eines Ausschnitts des erfindungsgemäßen Dämpfers aus Fig. 2.

### Ausführungsformen der Erfindung

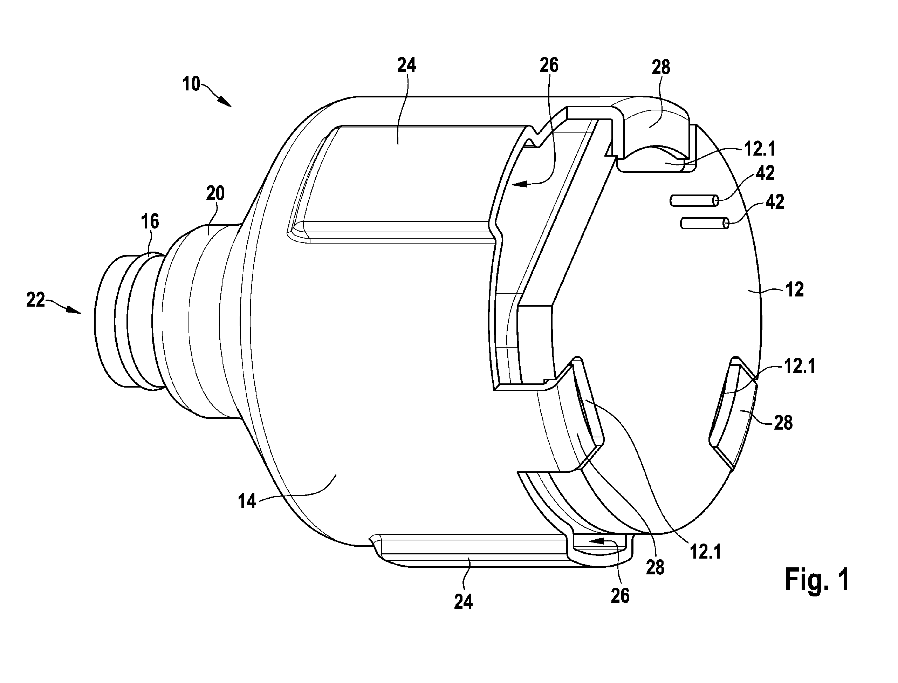

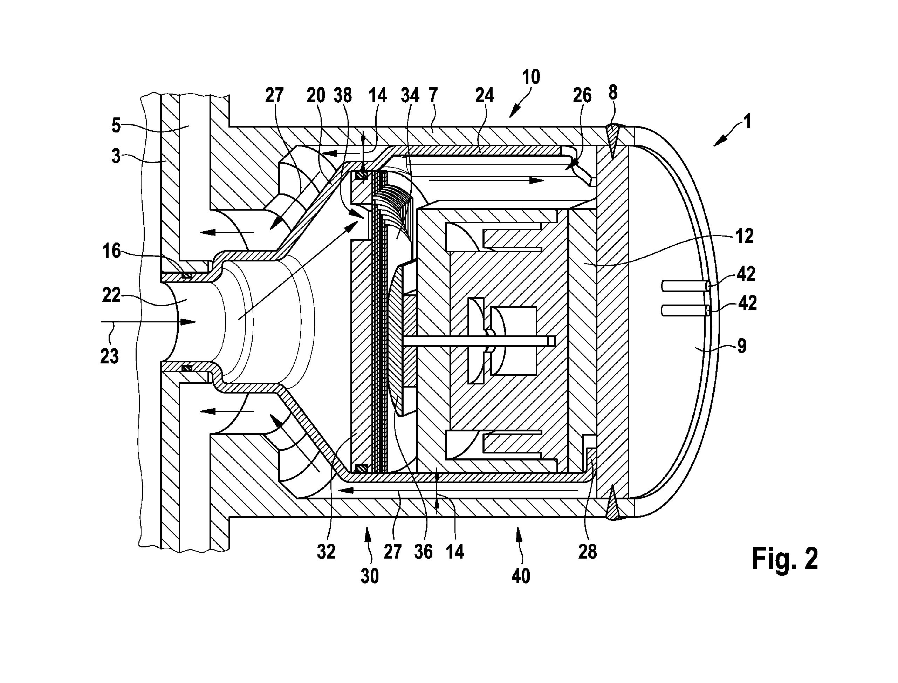

Wie aus Fig. 1 bis 3 ersichtlich ist, umfasst ein erfindungsgemäßer Dämpfer 1, der vorzugsweise als Stoßdämpfer eines Fahrzeugs ausgeführt ist, ein Innenrohr 3 und ein Außenrohr 5, welche über einen Anschlussstutzen 7 miteinander gekoppelt sind. Wie insbesondere aus Fig. 2 weiter ersichtlich ist, ist in dem Anschlussstutzen 7 ein adaptives Stellventil 10 so angeordnet, dass der Durchfluss eines Dämpferfluids zwischen dem Innenrohr 3 und dem Außenrohr 5 über das adaptive Stellventil 10 geführt ist.

Wie aus Fig. 1 bis 3 weiter ersichtlich ist, ist weist das Stellventil 10 eine Ventileinheit 30 und einen Ventilantrieb 40 auf, wobei zur Einstellung von Dämpferkennwerten der Durchfluss des Dämpferfluids über den Ventilantrieb 40 und die Ventileinheit 30 des Stellventils 10 eingestellt wird. Erfindungsgemäß ist für das Stellventil 10 ein Ventilgehäuse 20 vorgesehen, in welchem der Ventilantrieb 40 und die Ventileinheit 30 fixiert sind. Hierbei ist das Ventilgehäuse 20 so ausgeführt und in den Dämpferfluidfluss eingeschleift, dass die Ventileinheit 30 nur in einer Richtung vom Dämpferfluid durchströmt ist, wobei ein Zulauf 23 des Dämpferfluids aus dem Dämpfer 1 über eine an einem Ende des Ventilgehäuses 20 angeordnete Einströmöffnung 22 durch eine Innerkontur des Ventilgehäuses 20 über die Ventileinheit 30 geführt ist, und ein Rücklauf 27 des Dämpferfluids von mindestens einer Ausströmöffnung 26 des Ventilgehäuses 20 über eine Außenkontur des Ventilgehäuses 20 zurück zum Dämpfer 1 geführt ist.

Zur Dämpferfluidführung weist das Ventilgehäuse 20 mehrere mit dem Ventilgehäuse 20 verbundene Führungsmittel 24 auf. Im dargestellten Ausführungsbeispiel sind drei Führungsmittel 24 vorhanden, welche als Sicken ausgeführt sind. Hierbei führen Innenkonturen der als Sicken ausgeführten Führungsmittel 24 das Dämpferfluid von der Ventileinheit 30 zu der mindestens einen Ausströmöffnung 26 und Außenkonturen der als Sicken ausgeführten Führungsmittels 24 definiert die Abmessungen der Abströmquerschnitte 14 des Rücklaufs 27.

Wie aus Fig. 1 und 2 weiter ersichtlich ist, ist das Ventilgehäuse 20 am anderen Ende von einer Abdeckscheibe 12 abgeschlossen, welche über drei an das Ventilgehäuse 20 angeformte Biegezungen 28 gehalten ist, welche in entsprechende Ausnehmungen 12.1 der Abdeckscheibe 12 eingreifen. Wie aus Fig. 1 weiter ersichtlich ist, sind zwei elektrische Kontakte 42 zur Versorgung und Ansteuerung des elektrischen Ventilantriebs 40 durch die Abdeckscheibe 12 geführt. Wie insbesondere aus Fig. 2 ersichtlich ist, weitet sich ein innerer Querschnitt des Ventilgehäuses 20 vom Querschnitt der Einströmöffnung 22 auf einen Querschnitt zur Aufnahme der Ventileinheit 30 auf, um ein optimales Strömungsverhalten zu ermöglichen.

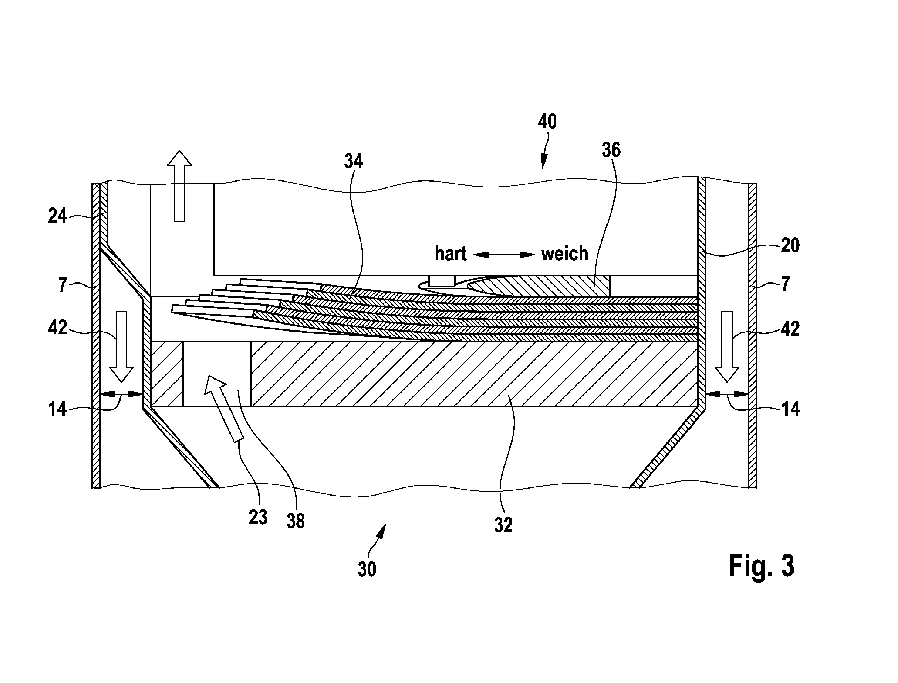

Wie aus Fig. 2 und 3 weiter ersichtlich ist, weist die Ventileinheit 30 eine Trägereinheit 32 mit einem Lagerbereich auf, in welchen als Blattfederpaket 34 ausgeführte Verstellmittel zur Regelung des Durchflusses durch das Stellventil 10 eingelegt sind. Die Trägereinheit 32 weist eine Durchflussöffnung 38 mit einer Steuerkante auf, welche von den als Blattfederpaket 34 ausgeführten Verstellmitteln im geschlossenen Zustand, d.h. bei einer Strömungsrichtung gegen die dargestellte Durchflussrichtung, vollständig abgedeckt ist. Bei der dargestellten Durchflussrichtung des Dämpferfluids durch das Stellventil 10 kann die Federrate des Blattfederpakets 34 zur Vorgabe eines Dämpfungsverhaltens über korrespondierende Vorgabemittel 36 eingestellt werden. Wie aus Fig. 2 und 3 weiter ersichtlich ist, ist über dem Blattfederpaket 34 ein als Schiebelement ausgeführtes Vorgabemittel 36 angeordnet, dessen Position zur Einstellung der Federrate über dem Blattfederpaket 34 veränderbar ist. Zum Verschieben weist das Schiebelement 36 beispielsweise ein nicht dargestelltes Zahnstangensegment auf, in das ein nicht dargestelltes Zahnradsegment eingreift, das zur Positionsveränderung des Schiebelements 36 von der Antriebseinheit 40 entsprechend gedreht wird. Eine geeignete Mechanik ist beispielsweise in der zitierten Offenlegungsschrift DE 10 2007 025 966 A1 beschrieben, so dass hier auf eine weitere detaillierte Beschreibung verzichtet wird.

Wie aus Fig. 3 weiter ersichtlich ist, öffnet bzw. verbiegt das durchströmende Dämpferfluid in der dargestellten Durchflussrichtung das Blattfederpaket 34. Die Verbiegung des Blattfederpakets 34 und damit der Öffnungswinkel bzw. der Öffnungsquerschnitt werden durch den über das Schiebeelement 36 eingestellten Federgrad des Blattfederpakets 34 vorgegeben. Somit beeinflusst das Blattfederpaket 34 den Durchflussquerschnitt des Dämpferfluids, das in die dargestellte Druckrichtung fließt, und gibt somit die Dämpfungskraft vor. Bei der nicht dargestellten Gegenrichtung wird das Blattfederpaket 34 gegen einen Anschlag gedrückt und die Durchflussöffnung 38 ist vollständig geschlossen. Die Verstellung des Schiebeelements 36 erfolgt vorzugsweise im unbelasteten Zustand des Blattfederpakets 34 mit Hilfe des Ventilantriebs 40 mit einer geringen Stellkraft, wodurch die Federrate des Blattfederpakets 34 zwischen den Extremzuständen "weiche" Dämpfungskennlinie und "harte" Dämpfungskennlinie eingestellt werden kann, wobei das Schiebelement 36 als Gegenlager für das Blattfederpaket 34 wirkt. Der Ventilantrieb 40 ist beispielsweise so ausgelegt, dass das Schiebeelement 36 in einem stromlosen Zustand in einer Mittelstellung zwischen den beiden Extremstellungen "hart" und "weich" verharrt und über das Anlegen einer positiven bzw. negativen Spannung in Richtung der beiden Extrempositionen bewegt werden kann.

Die Position des Schiebeelements 36 wird durch Auswerten der Signale von mindestens einer nicht dargestellten Sensoreinheit ermittelt, welche beispielsweise den Druck im Innenrohr und/oder im Außenrohr detektiert, wobei Stellgrößen zur Verstellung der Vorgabemittel durch Auswerten der detektierten Drücke berechnet und vorgegeben werden. Als Stellgröße für die Verstellmittel kann eine Kraft verwendet werden, die auf den Dämpfer 1 wirkt. Mit Hilfe der Sensoreinheit kann die Kraft F, die auf den Dämpfer 1 und somit auf das Fahrzeug wirkt, direkt ermittelt werden, wobei die wirkende Kraft F direkt aus den von der Sensoreinheit erfassten Drücken abgeleitet werden kann.

Wie aus Fig. 2 weiter ersichtlich ist, ist das Ventilgehäuse 20 des Stellventils 10 so im Anschlussstutzen 7 fixiert, dass das Dämpferfluid aus dem Innenrohr 3 des Dämpfers 1 als Zulauf 23 über die Einströmöffnung 22 durch eine Innerkontur des Ventilgehäuses 20 über die Ventileinheit 30 zur mindestens einen Ausströmöffnung 26 geführt ist und als Rücklauf 27 von der mindestens einen Ausströmöffnung 26 über eine Außenkontur des Ventilgehäuses 20 zurück zum Dämpfer 1 geführt ist. Der Anschlussstutzen 7 ist durch eine fuiddicht verschweißte Verschlussscheibe 9 abgeschlossen, wobei die elektrischen Kontakte 42 zur Kontaktierung des Antriebs 40 durch die Verschlussscheibe 9 geführt sind. Die druckfeste Abdichtung der Kontakte 42 erfolgt durch einen entsprechenden Einglasungsprozess. Die druckfeste Abdichtung des Anschlussstutzens 7 wird durch eine umlaufende Laserschweißverbindung 8 zwischen dem Anschlussstutzen 7 und der Verschlussscheibe 9 sichergestellt. In vorteilhafter Weise dichtet das in den Anschlussstutzen 7 eingepresste Ventilgehäuse 20 über mindestens ein Dichtelement 16 zwischen Zulauf 23 und Rücklauf 27 ab.

Ausführungsformen ermöglichen die Umsetzung eines einfachen, kostengünstigen Stellsystems, bei welchem gezielt nur eine vorgegebene Anzahl von Dämpferkennlinien für die Zug- und Druckstufe eingestellt werden kann, wobei nur eine adaptive Ventileinheit vorgesehen ist, welche immer nur in einer Richtung durchströmt wird. Durch den externen/angeflanschten Anschlussstutzen und ein 3-Rohr-Dämpferkonzept kann diese vereinfachte Funktionsanforderung erfüllt werden. Das Ventilgehäuse nimmt als zentrales Bauteil die Ventileinheit, den Drehantrieb und die Abdeckscheibe auf und bildet einen Anschlag für die Verschlussscheibe, die mit dem Aufnahmestutzen verschweißt wird. Neben der Fixierung der o.g. Baugruppen/Einzelteile dichtet das Ventilgehäuse zwischen Zulauf und Rücklauf ab, fixiert das Stellventil innerhalb des Anschlussstutzens durch drei als Sicken ausgeführte Führungselemente, setzt eine optimale Strömungsführung von Zulauf und Rücklauf um und stellt durch die Konstruktion den erforderlichen Abströmquerschnitts für den Rücklauf sicher. Außerdem werden die Baugruppen innerhalb des Ventilgehäuses durch die Biegezungen über die Abdeckscheibe fixiert. Auf Grund der einseitigen Durchströmungsrichtung ist der geometrische Aufbau des Stellventils entsprechend angepasst.

Ausführungsformen der Erfindung können in zukünftigen verstellbaren Stoßdämpfern für Kraftfahrzeug eingesetzt werden. In vorteilhafter Weise ermöglichen Ausführungsformen der Erfindung, dass für unterschiedliche Fahrsituationen immer die jeweils optimale Einstellung der Dämpferkennwerte möglich ist. Im Gegensatz zu einem herkömmlichen hydraulischen Proportionalventil ermöglichen die erfindungsgemäßen Federelemente eine direkte Regelung des Hauptfluidflusses praktisch ohne Verzögerungen und Einschwingzustände, wobei die Regelung durch die Entkopplung des Verstellvorgangs vom eigentlichen Arbeitshub in vorteilhafter Weise mit geringen Stellkräfte ausgeführt werden kann. Durch die mögliche sehr kompakte Ausführungsform eignen sich Ausführungsformen der vorliegenden Erfindung auch zur Dämpfung von Fahrzeugkabinen von Nutzfahrzeugen, zur Dämpfung von Fahrzeugsitzen, Aufliegern usw. Zudem können Ausführungsformen der Erfindung auch für Anwendungen außerhalb der Fahrzeugtechnik, beispielsweise im Maschinenbau, die einen regelbaren Dämpfer mit kompakter Bauform erfordern eingesetzt werden.

## Patentansprüche

1. Stellventil für einen Dämpfer mit einer Ventileinheit (30) und einem Ventilantrieb (40), wobei zur Einstellung von Dämpferkennwerten der Durchfluss eines Dämpferfluids über den Ventilantrieb (40) und die Ventileinheit (30) des Stellventils (10) einstellbar ist, **gekennzeichnet durch** ein Ventilgehäuse (20), in welchem der Ventilantrieb (40) und die Ventileinheit (30) fixiert sind, wobei das Ventilgehäuse (20) so ausgeführt und in den Dämpferfluidfluss eingeschleift ist, dass die Ventileinheit (30) nur in einer Richtung vom Dämpferfluid durchströmt ist, wobei ein Zulauf (23) des Dämpferfluids aus dem Dämpfer (1) über eine an einem Ende des Ventilgehäuses (20) angeordnete Einströmöffnung (22) **durch** eine Innerkontur des Ventilgehäuses (20) über die Ventileinheit (30) geführt ist, und ein Rücklauf (27) des Dämpferfluids von mindestens einer Ausströmöffnung (26) des Ventilgehäuses (20) über eine Außenkontur des Ventilgehäuses (20) zurück zum Dämpfer (1) geführt ist.

2. Stellventil nach Anspruch 1, **dadurch gekennzeichnet, dass** das Ventilgehäuse (20) zur Dämpferfluidführung mindestens ein Führungsmittel (24) aufweist, welches mit dem Ventilgehäuse (20) verbunden ist, wobei eine Innenkontur des mindestens einen Führungsmittels (24) das Dämpferfluid von der Ventileinheit (30) zu der mindestens einen Ausströmöffnung (26) führt und eine Außenkontur des mindestens einen Führungsmittels (24) die Abmessungen eines Abströmquerschnitts (14) des Rücklaufs (27) definiert.

3. Stellventil nach Anspruch 1 oder 2, **dadurch gekennzeichnet, dass** das Ventilgehäuse (20) am anderen Ende von einer Abdeckscheibe (12) abgeschlossen ist, welche über mit dem Ventilgehäuse (20) verbundene Biegezungen (28) gehalten ist, wobei die Biegezungen (28) in entsprechende Ausnehmungen (12.1) der Abdeckscheibe (12) eingreifen.

4. Stellventil nach einem der Ansprüche 1 bis 3, **dadurch gekennzeichnet, dass** sich ein innerer Querschnitt des Ventilgehäuses (20) vom Querschnitt der Einströmöffnung (22) auf einen Querschnitt zur Aufnahme der Ventileinheit (30) aufweitet.

5. Stellventil nach einem der Ansprüche 1 bis 4, **dadurch gekennzeichnet, dass** die Ventileinheit (30) mindestens ein als Federelement (34) ausgeführtes Verstellmittel aufweist, wobei die Federrate von mindestens einem der Federelemente (34) zur Vorgabe eines Dämpfungsverhaltens über korrespondierende Vorgabemittel (36) einstellbar ist.

6. Stellventil nach Anspruch 5, **dadurch gekennzeichnet, dass** die Vorgabemittel (36) über den Ventilantrieb (40) verstellbar sind, welcher in Abhängigkeit von Signalen von mindestens einer Sensoreinheit über elektrische Kontakte (42) ansteuerbar ist.

7. Dämpfer für ein Fahrzeug mit einem Innenrohr (3) und einem Außenrohr (5), wobei der Durchfluss eines Dämpferfluids zwischen dem Innenrohr (3) und dem Außenrohr (5) über mindestens ein adaptives Stellventil (10) geführt ist, **dadurch gekennzeichnet, dass** das mindestens eine Stellventil (10) nach einem der Ansprüche 1 bis 6 ausgeführt ist.

8. Dämpfer nach Anspruch 7, **dadurch gekennzeichnet, dass** das Ventilgehäuse (20) des Stellventils (10) in einen Anschlussstutzen (7) eingeführt ist, welcher das Innenrohr (3) mit dem Außenrohr (5) koppelt, so dass das Dämpferfluid aus dem Innenrohr (3) des Dämpfers (1) als Zulauf (23) über die Einströmöffnung (22) durch eine Innerkontur des Ventilgehäuses (20) über die Ventileinheit (30) zur mindestens einen Ausströmöffnung (26) geführt ist und als Rücklauf (27) von der mindestens einen Ausströmöffnung (26) über eine Außenkontur des Ventilgehäuses (20) zurück zum Dämpfer (1) geführt ist.

9. Dämpfer nach Anspruch 7 oder 8, **dadurch gekennzeichnet, dass** der Anschlussstutzen (7) durch eine fuiddicht verschweißte Verschlussscheibe (9) abgeschlossen ist.

10. Dämpfer nach einem der Ansprüche 7 bis 9, **dadurch gekennzeichnet, dass** das in den Anschlussstutzen (7) eingepresste Ventilgehäuse (20) über mindestens ein Dichtelement (16) zwischen Zulauf (23) und Rücklauf (27) abdichtet.
